# DEMANDE DE BREVET EUROPEEN

(11) **EP 0 679 734 A2**
(43) Date de publication de la demande: **02.11.1995**
(21) Numéro de dépôt: 95400915.5
(22) Date de dépôt: 25.04.1995
(51) Int. Cl.: C23D 5/00, C23D 5/06

(54) **Procédé pour émailler un objet, notamment un article culinaire**

(30) Priorité: 27.04.1994 FR 9405095
(71) Demandeur: SEB S.A., F-69130 Ecully (FR)
(72) Inventeur: Piera, Henri, 74150 Rumilly (FR)
(74) Mandataire: Keib, Gérard

(57) **Abrégé**

Dans le procédé pour réaliser un décor sur un objet (1), on applique sur l'objet au moins une couche de barbotine de fritte d'émail, après quoi, sans cuire ladite couche, on applique sur cette dernière un décor, en des zones localisées, à base de fritte d'émail et de pigments minéraux.

Le décor est réalisé à partir d'une pâte (2) comprenant un liant thermofusible ou réticulable par rayonnement ultraviolet, la fritte d'émail et les pigments, cette pâte (2) étant chauffée lors de son application sur la couche de barbotine de fritte d'émail pour faire fondre le liant thermofusible, après quoi l'ensemble est cuit pour vitrifier ladite couche et ledit décor.

## Description

La présente invention concerne un procédé pour réaliser un décor sur un objet, notamment un article culinaire dans lequel on applique sur l'objet au moins une couche de barbotine de fritte d'émail, après quoi, sans cuire ladite couche, on applique sur cette dernière un décor en des zones localisées, à base de fritte d'émail et de pigments minéraux.

Un tel procédé a déjà été décrit dans le brevet européen n° 127 489 au nom de la demanderesse.

Dans ce procédé, la première couche de barbotine de fritte d'émail projetée sur l'objet est d'abord séchée, puis on applique sur cette couche, une pâte huileuse renfermant la fritte d'émail mélangée avec un pigment, à travers un écran sérigraphique.

L'ensemble est ensuite cuit pour obtenir simultanément la vitrification de la fritte d'émail de la première couche et celle contenue dans le décor.

Ce procédé permet d'obtenir une excellente adhérence du décor sur la couche d'émail de base, de sorte que ce décor résiste très bien aux cycles répétés de chauffage et de refroidissement auxquels sont soumis les articles culinaires.

Toutefois, ce procédé présente des inconvénients.

Notamment, le procédé ci-dessus permet difficilement de réaliser un décor multicolore pouvant être cuit en une seule opération en même temps que la couche de fritte d'émail de base.

L'invention vise précisément à supprimer les inconvénients ci-dessus.

L'invention vise ainsi un procédé dans lequel on applique sur l'objet au moins une couche de barbotine de fritte d'émail, après quoi, sans cuire ladite couche, on applique sur cette dernière un décor, en des zones localisées, à base de fritte d'émail et de pigments minéraux.

Suivant l'invention, ce procédé est caractérisé en ce que la couche de barbotine de fritte d'émail est séchée et en ce que ledit décor est réalisé à partir d'une pâte comprenant un liant thermofusible ou réticulable par rayonnement ultraviolet, la fritte d'émail et les pigments, cette pâte étant chauffée lors de son application sur la couche de barbotine de fritte d'émail pour faire fondre le liant thermofusible, après quoi l'ensemble est cuit pour vitrifier ladite couche et ledit décor.

Le procédé selon l'invention permet de réaliser un décor en émail d'une ou plusieurs couleurs par exemple sur le fond ou la paroi latérale d'un ustensile de cuisson.

L'utilisation pour réaliser le décor d'un liant thermofusible ou réticulable par rayons UV permet d'appliquer le décor directement sur la couche de fritte d'émail préalablement séchée.

Selon une version préférée de l'invention, la pâte est appliquée à travers un écran sérigraphique lui-même appliqué sur la couche de barbotine de fritte d'émail, cet écran étant chauffé pour faire fondre le liant thermofusible.

Dans une autre version de l'invention, la pâte est appliquée par tampographie au moyen d'un cliché photographique gravé reproduisant le décor à réaliser sur lequel on applique la pâte et d'un tampon que l'on applique d'abord sur la pâte déposée sur le cliché pour prélever cette pâte puis sur la couche de barbotine de fritte d'émail déposée sur l'objet.

Dans une troisième version de l'invention, la pâte est appliquée par procédé offset, au moyen d'un rouleau encreur tournant dans un encrier contenant ladite pâte et déposant la pâte prélevée dans l'encrier sur un cliché photographique gravé reproduisant le décor à réaliser et appliqué sur un deuxième rouleau en contact avec le premier rouleau et entraîné en rotation par ce dernier, ce deuxième rouleau portant le cliché étant en contact avec un troisième rouleau tampon lui-même en contact avec un objet circulaire à décorer, de façon que le rouleau tampon puisse lors de sa rotation prélever la pâte déposée sur le cliché et l'appliquer sur l'objet circulaire.

Dans une quatrième version de l'invention, la pâte est appliquée par transfert total au moyen d'un écran sérigraphique à travers duquel la pâte est déposée sur un support, cet écran étant ensuite enlevé du support, après quoi le décor sous forme de pâte appliquée sur le support est prélevé par application d'un tampon puis transféré par ce dernier sur l'objet à décorer.

Dans une cinquième version de l'invention, la pâte est appliquée au moyen d'une buse projetant sur l'objet à décorer des gouttes réparties sur plusieurs endroits de l'objet.

D'autres particularités et avantages de l'invention apparaîtront encore dans la description ci-après.

Aux dessins annexés, donnés à titre d'exemples non limitatifs:
- la figure 1 est un schéma illustrant une première version du procédé selon l'invention;
- la figure 2 est un schéma illustrant une deuxième version du procédé selon l'invention;
- la figure 3 est un schéma illustrant une troisième version du procédé selon l'invention;
- la figure 4 est un schéma illustrant une quatrième version du procédé selon l'invention;
- la figure 5 est un schéma illustrant une cinquième version du procédé selon l'invention.

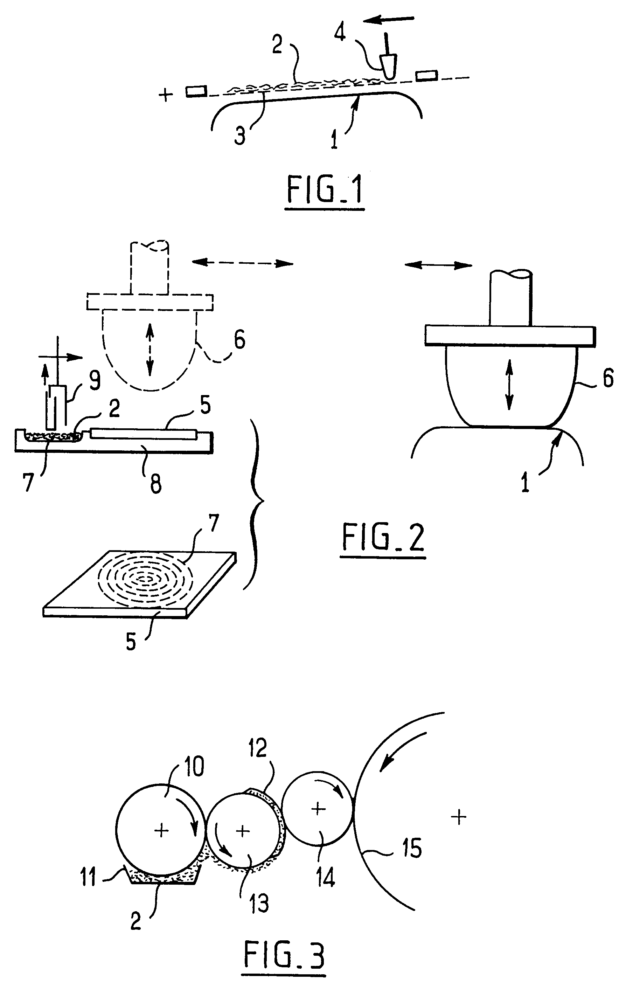

Dans la version représentée sur la figure 1, le procédé pour réaliser un décor sur un objet, notamment un article culinaire 1, consiste à appliquer sur l'objet par exemple par projection en phase aqueuse, au moins une couche (non représentée) de barbotine de fritte d'émail, après quoi, sans cuire ladite couche, on applique sur cette dernière un décor, en des zones localisées, à base de fritte d'émail et de pigments minéraux.

Conformément à l'invention, le décor est réalisé à partir d'une pâte comprenant un liant thermofusible ou réticulable par rayonnement ultraviolet, la fritte d'émail et les pigments. Cette pâte est chauffée lors de son application sur la couche de barbotine de fritte d'émail pour faire fondre le liant thermofusible, après quoi l'ensemble est cuit pour vitrifier la couche et le décor.

Dans l'exemple de la figure 1, la pâte 2 est appliquée au moyen d'une racle 4 à travers un écran sérigraphique 3 lui-même appliqué sur la couche de barbotine de fritte d'émail. Cet écran 3 est chauffé pour faire fondre le liant thermofusible.

L'écran 3 est de préférence métallique et peut ainsi être chauffé par effet Joule.

Le liant thermofusible de la pâte 2 peut être à base de cire.

La composition de la pâte 2 peut par exemple être la suivante:
fritte d'émail en poudre:100 parties en poids
pigments minéraux: 25 parties en poids liant thermofusible
(par exemple alcool stéarique) 60 parties en poids

Dans la version de la figure 2, la pâte 2 est appliquée par tampographie au moyen d'un cliché 5 photographique gravé reproduisant le décor 7 à réaliser sur lequel on applique la pâte 2 et d'un tampon 6 par exemple en silicone, que l'on applique d'abord sur la pâte 2 déposée sur le cliché 5 pour prélever cette pâte puis sur la couche de barbotine de fritte d'émail déposée sur l'objet 1.

Dans l'exemple représenté sur la figure 2, la pâte 2 est contenue dans un encrier 7 ménagé dans un support 8 portant le cliché 5. Cette pâte 2 est appliquée sur le cliché 5 au moyen d'une racle 9 mobile entre l'encrier 7 et le cliche 5. L'encrier 7 et le support 8 du cliché sont chauffés pour faire fondre le liant thermofusible contenu dans la pâte 2.

Dans la version illustrée par la figure 3, la pâte 2 est appliquée par procédé offset, au moyen d'un rouleau encreur 10 tournant dans un encrier 11 contenant la pâte 2 et déposant la pâte prélevée dans l'encrier 11 sur un cliché photographique 12 gravé reproduisant le décor à réaliser. Le cliché 12 est appliqué sur un deuxième rouleau 13 en contact avec le premier rouleau 11 et entraîné en rotation par ce dernier. Le deuxième rouleau 13 portant le cliché 12 est en contact avec un troisième rouleau tampon 14 en silicone lui-même en contact avec un objet circulaire 15, par exemple une casserole à décorer, de façon que le rouleau tampon 14 puisse lors de sa rotation prélever la pâte déposée sur le cliché 12 et l'appliquer sur l'objet circulaire 15.

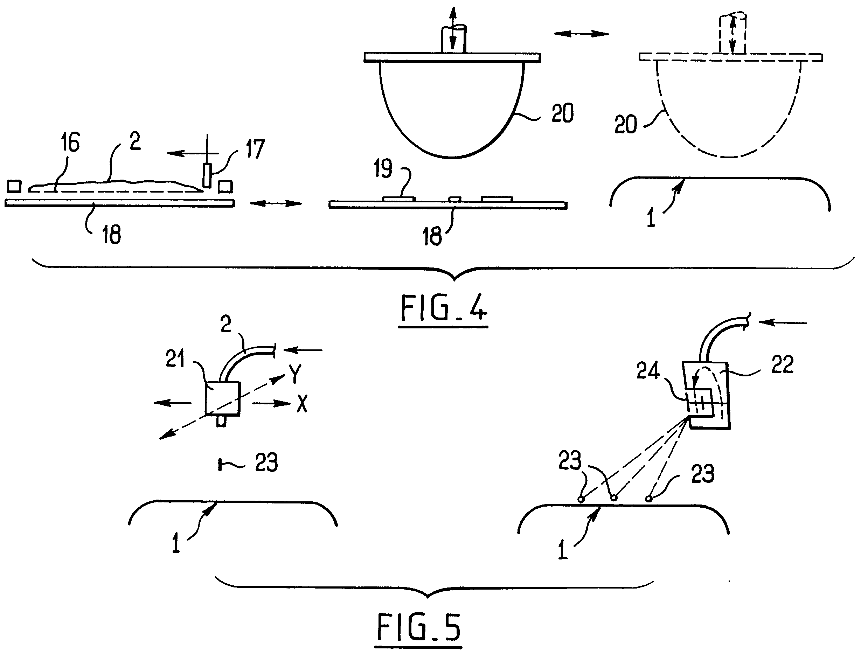

Dans l'exemple de la figure 4, la pâte 2 est appliquée par transfert total au moyen d'un écran sérigraphique 16 chauffé par effet Joule, à travers duquel la pâte 2 est déposée au moyen d'une racle 17, sur un support 18. L'écran 16 est ensuite enlevé du support 18, après quoi le décor 19 sous forme de pâte appliqué sur le support 18 est prélevé par application d'un tampon 20 en silicone puis transféré par ce dernier sur l'objet 1 à décorer.

Dans toutes les versions décrites ci-dessus, on peut appliquer sur l'objet un décor constitué par plusieurs couleurs, en répétant les opérations d'application du décor un nombre de fois correspondant à celui des couleurs.

Dans la version représentée sur la figure 5, le décor est appliqué au moyen d'une buse 21, 22 projetant sur l'objet 1 à décorer des gouttes 23 réparties sur plusieurs endroits de l'objet.

Ces gouttes 23 renferment une fritte d'émail et des pigments minéraux.

Dans le cas du schéma à gauche de la figure 5, pendant l'opération, la buse 21 est déplacée selon des axes X, Y en dessus de l'objet 1.

Dans le cas du schéma à droite de la figure 5, la buse 22 est immobile et les gouttes 23 sont déviées au moyen d'un champ électrostatique 24.

La buse 21 ou 22 peut être chauffée pour liquéfier le liant thermofusible contenu dans la pâte 2 introduite dans la buse.

Dans toutes les versions du procédé, on peut utiliser à la place du liant thermofusible, un liant réticulable par rayons UV. Dans ce cas, chaque application de la pâte de fritte d'émail sera suivie par une exposition aux radiations d'une lampe UV.

De même, la cuisson unique finale, permet de vitrifier simultanément des particules d'émail de la ou des couches de base et celles contenues dans le décor qui peut être polychrome.

Pour toutes les versions, on constate une excellente adhérence du décor à la couche d'émail de base.

## Revendications

1. Procédé pour réaliser un décor sur un objet (1, 15, 25), notamment un article culinaire, dans lequel on applique sur l'objet au moins une couche de barbotine de fritte d'émail, après quoi, sans cuire ladite couche, on applique sur cette dernière un décor, en des zones localisées, à base de fritte d'émail et de pigments minéraux, caractérisé en ce que la couche de barbotine de fritte d'émail est séchée et en ce que ledit décor est réalisé à partir d'une pâte (2) comprenant un liant thermofusible ou réticulable par rayonnement ultraviolet, la fritte d'émail et les pigments, cette pâte (2) étant chauffée lors de son application sur la couche de barbotine de fritte d'émail pour faire fondre le liant thermofusible, après quoi l'ensemble est cuit pour vitrifier ladite couche et ledit décor.

2. Procédé conforme à la revendication 1, caractérisé en ce que ladite pâte (2) est appliquée à travers un écran sérigraphique (3) lui-même appliqué sur la couche de barbotine de fritte d'émail, cet écran (3) étant chauffé pour faire fondre le liant thermofusible.

3. Procédé conforme à la revendication 2, caractérisé en ce que l'écran (3) est métallique et est chauffé par effet Joule.

4. Procédé conforme à l'une des revendications 1 à 3, caractérisé en ce que le liant thermofusible est à base de cire.

5. Procédé conforme à la revendication 1, caractérisé en ce que la pâte (2) est appliquée par tampographie au moyen d'un cliché (5) photographique gravé reproduisant le décor (7) à réaliser sur lequel on applique la pâte (2) et d'un tampon (6) que l'on applique d'abord sur la pâte déposée sur le cliché (5) pour prélever cette pâte puis sur la couche de barbotine de fritte d'émail déposée sur l'objet (1).

6. Procédé conforme à la revendication 5, caractérisé en ce que la pâte (2) est contenue dans un encrier (7) ménagé dans un support (8) portant le cliché (5) et appliquée sur ce dernier au moyen d'une racle (9) mobile entre l'encrier (7) et le cliché (5), l'encrier et le support (8) du cliché étant chauffés pour faire fondre la pâte thermofusible.

7. Procédé conforme à la revendication 1, caractérisé en ce que la pâte (2) est appliquée par procédé offset, au moyen d'un rouleau encreur (10) tournant dans un encrier (11) contenant ladite pâte (2) et déposant la pâte prélevée dans l'encrier sur un cliché photographique (12) gravé reproduisant le décor à réaliser et appliqué sur un deuxième rouleau (13) en contact avec le premier rouleau (10) et entraîné en rotation par ce dernier, ce deuxième rouleau (13) portant le cliché (12) étant en contact avec un troisième rouleau tampon (14) lui-même en contact avec un objet circulaire à décorer (15), de façon que le rouleau tampon (14) puisse lors de sa rotation prélever la pâte déposée sur le cliché et l'appliquer sur l'objet circulaire (15).

8. Procédé conforme à la revendication 1, caractérisé en ce que la pâte (2) est appliquée par transfert total au moyen d'un écran sérigraphique (16) à travers duquel la pâte (2) est déposée sur un support (18), cet écran (16) étant ensuite enlevé du support (18), après quoi le décor sous forme de pâte (19) appliqué sur le support (18) est prélevé par application d'un tampon (20) puis transféré par ce dernier sur l'objet à décorer (1).

9. Procédé conforme à l'une des revendications 1 à 8, caractérisé en ce qu'on applique sur l'objet un décor constitué par plusieurs couleurs, en répétant les opérations d'application du décor un nombre de fois correspondant à celui des couleurs.

10. Procédé conforme à la revendication 1, caractérisé en ce que la pâte (2) est appliquée au moyen d'une buse (21, 22) projetant sur l'objet à décorer (1) des gouttes (23) réparties sur plusieurs endroits de l'objet (1).

11. Procédé conforme à la revendication 10, caractérisé en ce que pendant l'opération, la buse (21) est déplacée au-dessus de l'objet.

12. Procédé conforme à la revendication 10, caractérisé en ce que la buse (22) est immobile et les gouttes (23) sont déviées au moyen d'un champ électrostatique (24).

13. Procédé conforme à l'une des revendications 10 à 12, caractérisé en ce que la buse (21, 22) est chauffée pour liquéfier le liant thermofusible contenu dans la pâte (2).
